**Europäisches Patentamt**

**European Patent Office**

**Office européen des brevets**

(19)

(11) Veröffentlichungsnummer : **0 413 180 B1**

(12)

# EUROPÄISCHE PATENTSCHRIFT

(45) Veröffentlichungstag der Patentschrift :
**23.12.92 Patentblatt 92/52**

(51) Int. Cl.$^5$ : **G01B 21/22,** G01B 11/26

(21) Anmeldenummer : **90114465.9**

(22) Anmeldetag : **27.07.90**

(54) Inkrementaler Drehgeber.

(30) Priorität : **14.08.89 DE 3926799**

(43) Veröffentlichungstag der Anmeldung :
**20.02.91 Patentblatt 91/08**

(45) Bekanntmachung des Hinweises auf die
Patenterteilung :
**23.12.92 Patentblatt 92/52**

(84) Benannte Vertragsstaaten :
**AT CH DE FR GB IT LI**

(56) Entgegenhaltungen :
**DD-A- 89 729**
**DE-A- 3 429 648**
**US-A- 3 419 727**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Ernst, Alfons, Dipl.-Ing.**
**Traunring 62**
**W-8225 Traunreut (DE)**

EP 0 413 180 B1

## Beschreibung

Die Erfindung betrifft einen inkrementalen Drehgeber gemäß dem Oberbegriff des Anspruches 1.

Die DE-A-34 29 648 beschreibt einen Drehgeber, dessen Geberwelle mit einer ersten Scheibe verbunden ist, die eine inkrementale Winkelteilung, eine Referenzmarke sowie mehrere spiralförmige Codeabtastfelder aufweist. Auf der Geberwelle ist konzentrisch zur ersten Scheibe eine zweite Scheibe drehbar gelagert, die über ein Untersetzungsgetriebe an die erste Scheibe angekoppelt ist. Auf der zweiten Scheibe befindet sich eine Codeteilung, die von einem stationären Codeabtastfeld auf einer Abtastplatte im Zusammenwirken mit den spiralförmigen Codeabtastfeldern auf der ersten Scheibe abgetastet wird. Bei jeder vollen Umdrehung der ersten Scheibe wird durch die Abtastung der Referenzmarke die serielle Abtastung der Codeteilung veranlaßt, die die Anzahl der Umdrehungen der ersten Scheibe absolut angibt. In einer Abwandlung ist eine zusätzliche Scheibe zur Aufnahme der spiralförmigen Codeabtastfelder vorgesehen, die konzentrisch zur ersten Scheibe mit der Geberwelle verbunden ist und erlaubt, daß auf der zweiten Scheibe die Codeinformation der Codeteilung erhöht werden kann. Dieser Drehgeber ist wegen der Erfordernis einer Codeteilung relativ aufwendig.

Aus der EP-A1-0 300 183 ist ein inkrementaler Drehgeber mit einer eine inkrementale Winkelteilung und eine Referenzmarke aufweisenden Scheibe bekannt, an die ein zweistufiger Absolutwertgeber mittels Untersetzungsgetriebe angekoppelt ist, der jede Umdrehung des inkrementalen Drehgebers mittels eines aus der Referenzmarke abgeleiteten Referenzsignals erfaßt. Eine Logikeinheit erzeugt aus dem Referenzsignal des inkrementalen Drehgebers ein zusätzliches Referenzsignal, das entsprechend der Umdrehungszahl aus den Signalen des Absolutwertgebers zum Referenzsignal des inkrementalen Drehgebers versetzt ist. Aus dem Inkrementalsignal des inkrementalen Drehgebers, den Signalen des Absolutwertgebers und aus den beiden Referenzsignalen ermittelt ein Prozessor den absoluten Winkelmeßwert.

Dieser inkrementale Drehgeber hat den Nachteil, daß ein verhältnismäßig hoher Aufwand erforderlich ist; bei einem zweistufigen 10 Bit-Absolutwertgeber sind z. B. 11 Photoelemente und Signalformer erforderlich.

In der DE-OS 34 16 090 ist ein inkrementaler Drehgeber mit einer eine inkrementale Winkelteilung und eine erste Referenzmarke aufweisenden ersten Scheibe beschrieben, an die eine zweite Scheibe mit einer zweiten Referenzmarke über ein Untersetzungsgetriebe angekoppelt ist. Die Untersetzung ist so gewählt, daß für jede Umdrehung der Geberwelle mit der ersten Scheibe ein spezifischer Versatz zwischen den aus den beiden Referenzmarken gewonnenen zwei Referenzsignalen besteht. Aus dem Inkrementalsignal der ersten Scheibe und dem spezifischen Versatz zwischen den beiden Referenzsignalen für die jeweilige Umdrehungszahl wird der absolute Winkelmeßwert ermittelt. Dieser inkrementale Drehgeber weist jedoch den Nachteil auf, daß die Genauigkeit des Phasenversatzes zwischen den beiden Referenzsignalen von der Genauigkeit des Untersetzungsgetriebes abhängt, so daß entweder ein hoher Aufwand für das Untersetzungsgetriebe oder eine geringere Anzahl von unterscheidbaren Umdrehungen der ersten Scheibe in Kauf genommen werden muß.

Der Erfindung liegt die Aufgabe zugrunde, einen inkrementalen Drehgeber der genannten Gattung anzugeben, der einen einfachen Aufbau aufweist und die eindeutige Unterscheidung einer großen Anzahl von Umdrehungen der Geberwelle mit der die inkrementale Winkelteilung aufweisenden Scheibe erlaubt.

Diese Aufgabe wird erfindungsgemäß durch die Merkmale des Anspruches 1 gelöst.

Die mit der Erfindung erzielten Vorteile bestehen insbesondere darin, daß durch den einfachen Aufbau ein preiswerter Drehgeber geschaffen wird, der beispielsweise bei der Messung der Längsverschiebung eines Schlittens einer Bearbeitungsmaschine aufgrund der eindeutigen Unterscheidung einer großen Anzahl von Umdrehungen der Geberwelle mit der die inkrementale Winkelteilung aufweisenden Scheibe große Meßlängen mit einer hohen Meßsicherheit zuläßt, so daß dieser Drehgeber universell mit hoher Fertigungsgüte eingesetzt werden kann.

Vorteilhafte Ausbildungen der Erfindung entnimmt man den Unteransprüchen.

Ausführungsbeispiele der Erfindung werden anhand der Zeichnung näher erläutert.

Es zeigen

Figur 1 einen ersten inkrementalen Drehgeber mit zwei Scheiben in einem Längsschnitt;

Figur 2 die zwei Scheiben in schematischer Darstellung;

Figur 3 ein erstes Signaldiagramm;

Figur 4 einen zweiten inkrementalen Drehgeber mit vier Scheiben in einem Längsschnitt;

Figur 5 die vier Scheiben in schematischer Darstellung;

Figur 6 ein zweites Signaldiagramm;

Figur 7 einen dritten inkrementalen Drehgeber mit drei Scheiben in einem Längsschnitt.

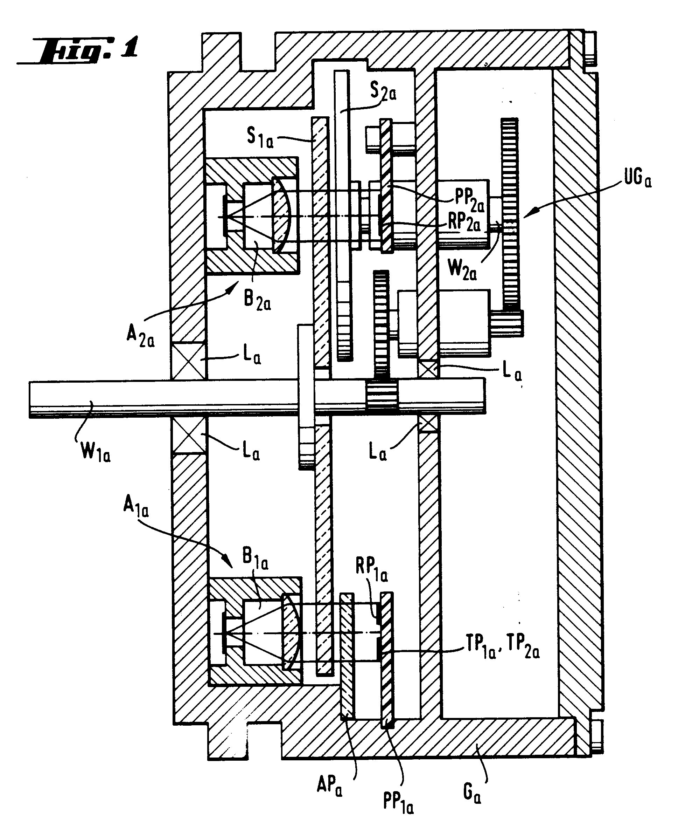

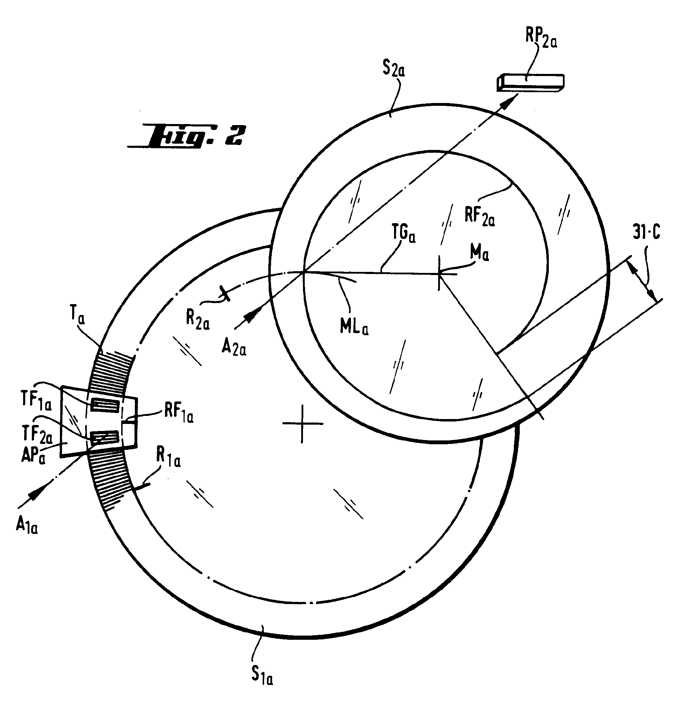

Figur 1 zeigt einen ersten inkrementalen Drehgeber mit zwei Scheiben $S_{1a}$, $S_{2a}$ in einem Längsschnitt, dessen Gehäuse $G_a$ als Stator an einem ersten nicht gezeigten Objekt, beispielsweise an dem Maschinenbett einer Bearbeitungsmaschine, befestigt ist. Im Inneren des Gehäuses $G_a$ ist eine erste Welle $W_{1a}$ als Geberwelle mittels Lager $L_a$ drehbar gelagert und mit einem nicht dargestellten zweiten Objekt, beispielsweise mit einer Spindel eines Maschinenschlittens der Bearbeitungsmaschine verbunden. Die erste Welle $W_{1a}$ trägt die erste Scheibe $S_{1a}$, die an ihrer Peripherie eine inkrementale Winkelteilung $T_a$ mit einer Teilungsperiode C aufweist; der inkrementalen Winkelteilung $T_a$ sind auf der Scheibe $S_{1a}$ eine erste Referenzmarke $R_{1a}$ und eine zweite Referenzmarke $R_{2a}$ fest zugeordnet. In Figur 2 sind die beiden Scheiben $S_{1a}$, $S_{2a}$ schematisch dargestellt. Die inkrementale Winkelteilung $T_a$ ist als Strichteilung im Ausschnitt und die Referenzmarken $R_{1a}$, $R_{2a}$ sind als Einzelstriche gezeigt; die Referenzmarken $R_{1a}$, $R_{2a}$ können in herkömmlicher Weise jeweils auch durch eine Strichgruppe gebildet werden.

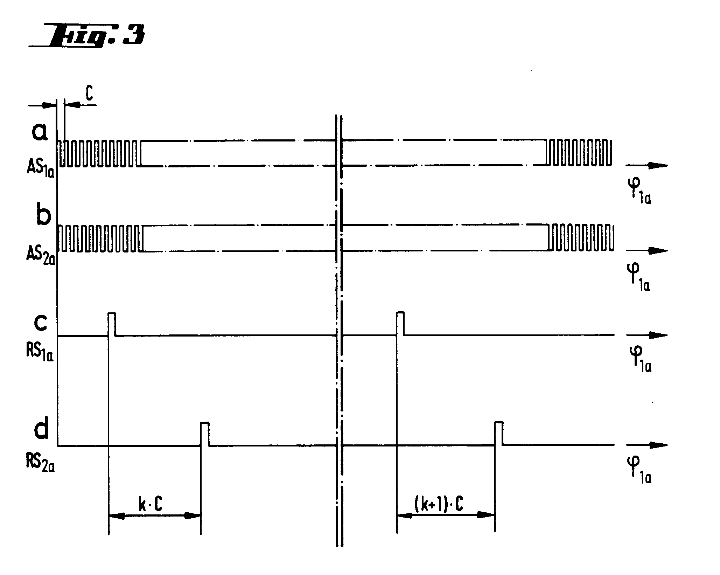

Die inkrementale Winkelteilung $T_a$ und die erste Referenzmarke $R_{1a}$ der ersten Scheibe $S_{1a}$ werden von einer ersten Abtasteinheit $A_{1a}$ abgetastet, die eine erste Beleuchtungseinheit $B_{1a}$ mit parallelem Lichtstrahlengang und zur Abtastung der inkrementalen Winkelteilung $T_a$ zwei zueinander versetzte Teilungsabtastfelder $TF_{1a}$, $TF_{2a}$ auf einer Abtastplatte $AP_a$ sowie zwei zugehörige Teilungsphotoelemente $TP_{1a}$, $TP_{2a}$ auf einer ersten Photoelementeplatine $PP_{1a}$ aufweist, die bei einer Drehung der ersten Scheibe $S_{1a}$ bezüglich der ersten Abtasteinheit $A_{1a}$ zwei um 90° zueinander phasenversetzte Abtastsignale $AS_{1a}$, $AS_{2a}$ mit einer Periode C entsprechend der Teilungsperiode C der inkrementalen Winkelteilung $T_a$ erzeugen, die in Figur 3a, b als Funktion des Drehwinkels $\varphi_{1a}$ der Geberwelle $W_{1a}$ mit der ersten Scheibe $S_{1a}$ dargestellt sind und aus denen in bekannter Weise die Winkelmeßwerte und der Drehsinn der Geberwelle $W_{1a}$ mit der ersten Scheibe $S_{1a}$ ermittelt werden. Die erste Abtasteinheit $A_{1a}$ weist zusätzlich zur Abtastung der ersten Referenzmarke $R_{1a}$ ein erstes Referenzabtastfeld $RF_{1a}$ auf der Abtastplatte $AP_a$ sowie auf der ersten Photoelementeplatine $PP_{1a}$ ein zugehöriges erstes Referenzphotoelement $RP_{1a}$ auf, das pro Umdrehung der ersten Scheibe $S_{1a}$ ein erstes Referenzsignal $RS_{1a}$ erzeugt, das in Figur 3c als Funktion des Drehwinkels $\varphi_{1a}$ der Geberwelle $W_{1a}$ mit der ersten Scheibe $S_{1a}$ dargestellt ist.

Die zweite Referenzmarke $R_{2a}$ der ersten Scheibe $S_{1a}$ wird von einer zweiten Abtasteinheit $A_{2a}$ abgetastet, die eine zweite Beleuchtungseinheit $B_{2a}$ mit parallelem Lichtstrahlengang und ein spiralförmiges zweites Referenzabtastfeld $RF_{2a}$ auf der zweiten Scheibe $S_{2a}$ sowie auf einer zweiten Photoelementeplatine $PP_{2a}$ ein zugehöriges zweites Referenzphotoelement $RP_{2a}$ aufweist, das pro Umdrehung der ersten Scheibe $S_{1a}$ ein zweites Referenzsignal $RS_{2a}$ erzeugt, das in Figur 3d als Funktion des Drehwinkels $\varphi_{1a}$ der Geberwelle $W_{1a}$ mit der ersten Scheibe $S_{1a}$ dargestellt ist. Zwischen der ersten Referenzmarke $R_{1a}$ und der zweiten Referenzmarke $R_{2a}$ auf der ersten Scheibe $S_{1a}$ besteht ein derartiger Winkelversatz, daß beim Anfangspunkt des gesamten Meßbereichs die erste Referenzmarke $R_{1a}$ vom ersten Referenzabtastfeld $RF_{1a}$ und die zweite Referenzmarke $R_{2a}$ vom ersten Abtastbereich des zweiten Referenzabtastfeldes $RF_{2a}$ simultan abgetastet werden.

Die zweite Scheibe $S_{2a}$ ist auf einer zweiten Welle $W_{2a}$ befestigt, die im Inneren des Gehäuses $G_a$ drehbar gelagert ist und von der ersten Welle $W_{1a}$ über ein Untersetzungsgetriebe $UG_a$ mit einem Untersetzungsverhältnis ia = 32 angetrieben wird. Nach jeder vollen Umdrehung der ersten Scheibe $S_{1a}$ hat sich die zweite Scheibe $S_{2a}$ um 1/32 Umdrehungen gedreht, so daß nun die zweite Referenzmarke $R_{2a}$ der ersten Scheibe $S_{1a}$ vom nächstfolgenden Abtastbereich des spiralförmigen zweiten Referenzabtastfeldes $RF_{2a}$ der zweiten Scheibe $S_{2a}$ abgetastet wird. Bei einer vollen Umdrehung der zweiten Scheibe $S_{2a}$ sind 32 kontinuierlich aufeinanderfolgende Abtastbereiche des spiralförmigen zweiten Referenzabtastfeldes $RF_{2a}$ jeweils nacheinander zur Abtastung der zweiten Referenzmarke $R_{2a}$ der ersten Scheibe $S_{1a}$ wirksam geworden. Diese 32 Abtastbereiche des spiralförmigen zweiten Referenzabtastfeldes $RF_{2a}$ besitzen einen jeweiligen gegenseitigen radialen Versatz entsprechend einer Teilungsperiode C der inkrementalen Winkelteilung $T_a$ auf der zweiten Scheibe $S_{2a}$. Da der Mittelpunkt $M_a$ der zweiten Scheibe $S_{2a}$ auf einer Tangente $TG_a$ an die Mittellinie $ML_a$ der abgetasteten zweiten Referenzmarke $R_{2a}$ der ersten Scheibe $S_{1a}$ liegt, werden auch bei einem relativ großen Spiel im Untersetzungsgetriebe $UG_a$ zwischen der ersten Scheibe $S_{1a}$ und der zweiten Scheibe $S_{2a}$ die Positionen der erzeugten zweiten Referenzsignale $RS_{2a}$ bezüglich der inkrementalen Winkelteilung $T_a$ nicht beeinflußt.

Der gesamte Meßbereich dieses ersten inkrementalen Drehgebers beträgt n = 32 Umdrehungen der Geberwelle $W_{1a}$ mit der ersten Scheibe $_{1a}$. Das Auftreten des ersten Referenzsignales $RS_{1a}$ zeigt lediglich an, daß die erste Scheibe $S_{1a}$ eine ganze Umdrehung vollführt hat, nicht jedoch, welche Umdrehungszahl k (k = 1, 2, ...n) vom Anfangspunkt ab jeweils vorliegt. Bei der k-ten Umdrehung der ersten Scheibe $S_{1a}$ besitzt das zweite Referenzsignal $RS_{2a}$ den spezifischen Versatz k · C gegenüber dem ersten Referenzsignal $RS_{1a}$ zur Kennzeichnung dieser k-ten Umdrehung der Geberwelle $W_{1a}$ (linke Seite der Figur 3) und bei der (k+1)-ten Umdrehung der ersten Scheibe $S_{1a}$ den spezifischen Versatz (k+1) · C zur Kennzeichnung der (k+1)-ten Umdrehung der Geberwelle $W_{1a}$ (rechte Seite der Figur 3). Dieser spezifische Versatz k · C zwischen dem ersten Referenzsignal $RS_{1a}$ und dem k-ten zweiten Referenzsignal $RS_{2a}$ wird durch den radialen Versatz von jeweils einer Teilungsperiode C zwischen den benachbarten Abtastbereichen des spiralförmigen zweiten Referenzabtastfeldes $RF_{2a}$ bewirkt. Je nach Drehsinn der ersten Scheibe $S_{1a}$ vergrößert bzw. verringert sich die Zahl k um den Wert 1 pro Umdrehung der Geberwelle $W_{1a}$ mit der ersten Scheibe $S_{1a}$.

Die erste Scheibe $S_{1a}$ und die zweite Scheibe $S_{2a}$

sind dicht nebeneinander in Richtung der Lichtstrahlengänge angeordnet und parallel zueinander exzentrisch versetzt.

Wenn die Referenzmarken $R_{1a}$, $R_{2a}$ und die Referenzabtastfelder $RF_{1a}$, $RF_{2a}$ nicht jeweils durch einen Einzelstrich gemäß Figur 2 gebildet sind, sondern jeweils aus einer Strichgruppe mit einer Zufallsverteilung bestehen, kann man schmalere und steilere Referenzsignale $RS_{1a}$, $RS_{2a}$ erzeugen und erhält als weiteren Vorteil, daß man mit kleineren Referenzphotoelementen $RP_{1a}$, $RP_{2a}$ auskommt; kleinere Referenzphotoelemente $RP_{1a}$, $RP_{2a}$, kann man auch einsetzen, wenn die parallelen Lichtstrahlenbündel der Abtasteinheiten $A_{1a}$, $A_{2a}$ jeweils durch eine Linse gesammelt werden.

Aus den Abtastsignalen $AS_{1a}$, $AS_{2a}$ der inkrementalen Winkelteilung $T_a$ und aus dem spezifischen Versatz zwischen dem ersten Referenzsignal $RS_{1a}$ und dem zweiten Referenzsignal $RS_{2a}$ für die jeweilige Umdrehungszahl wird der absolute Winkelmeßwert ermittelt.

Die erste Referenzmarke $R_{1a}$ und die zweite Referenzmarke $R_{2a}$ können in nicht dargestellter Weise auch zu einer Referenzmarke zusammengefaßt werden. Der dadurch bedingte zusätzliche Versatz zwischen dem ersten Referenzsignal $RS_{1a}$ und dem zweiten Referenzsignal $RS_{2a}$ wird rechnerisch kompensiert.

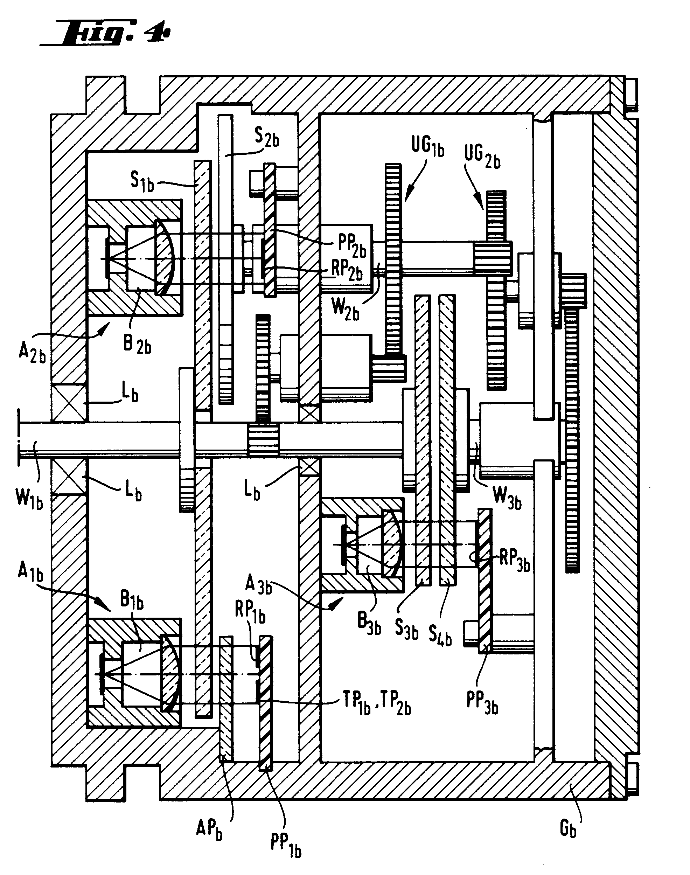

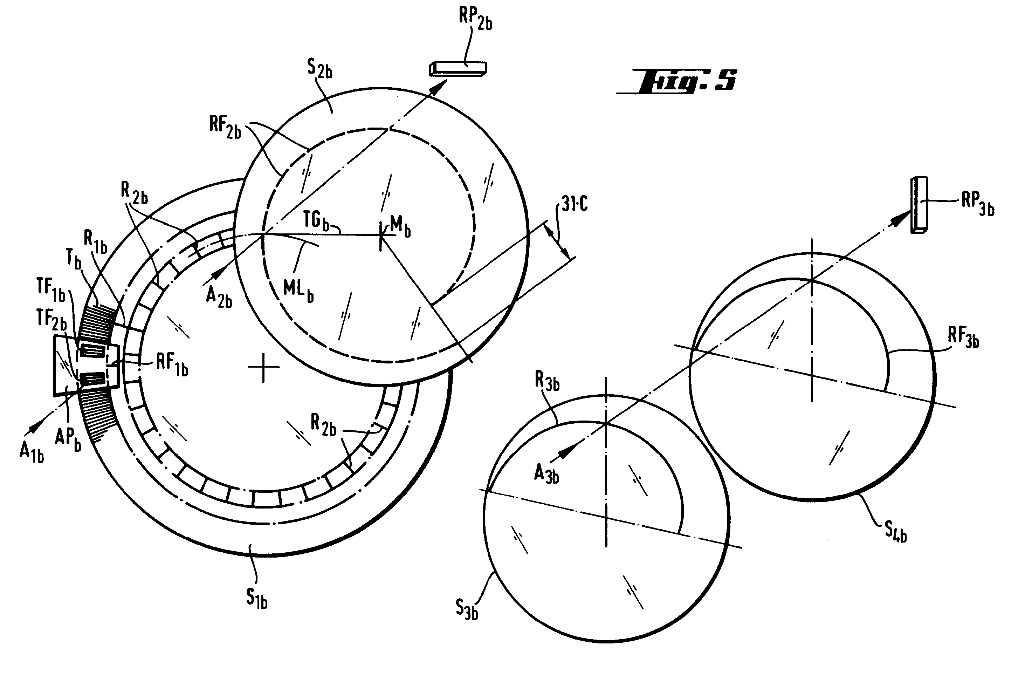

Figur 4 zeigt einen zweiten inkrementalen Drehgeber mit vier Scheiben $S_{1b}$ - $S_{4b}$ in einem Längsschnitt, dessen Gehäuse $G_b$ als Stator an einem ersten nicht gezeigten Objekt, beispielsweise an dem Maschinenbett einer Bearbeitungsmaschine, befestigt ist. Im Inneren des Gehäuses $G_b$ ist eine erste Welle $W_{1b}$ als Geberwelle mittels Lager $L_b$ drehbar gelagert und mit einem nicht dargestellten zweiten Objekt, beispielsweise mit einer Spindel eines Maschinenschlittens der Bearbeitungsmaschine, verbunden. Die erste Welle $W_{1b}$ trägt die erste Scheibe $S_{1b}$, die an ihrer Peripherie eine inkrementale Winkelteilung $T_b$ mit einer Teilungsperiode C besitzt; konzentrisch zur inkrementalen Winkelteilung $T_b$ sind auf einer ersten Referenzmarkenspur eine einzige erste Referenzmarke $R_{1b}$ und auf einer zweiten Referenzmarkenspur 32 zweite Referenzmarken $R_{2b}$ in gleichen Abständen über den Umfang der ersten Scheibe $S_{1b}$ aufgebracht. In Figur 5 sind die vier Scheiben $S_{1b}$ - $S_{4b}$ schematisch dargestellt. Die inkrementale Winkelteilung $T_b$ ist als Strichteilung im Ausschnitt und die Referenzmarken $R_{1b}$, $R_{2b}$ jeweils als Einzelstrich dargestellt; in herkömmlicher Weise bestehen die Referenzmarken $R_{1b}$, $R_{2b}$ jedoch jeweils aus einer Strichgruppe. Die Referenzmarken $R_{1b}$, $R_{2b}$ sind der inkrementalen Winkelteilung $T_b$ fest zugeordnet.

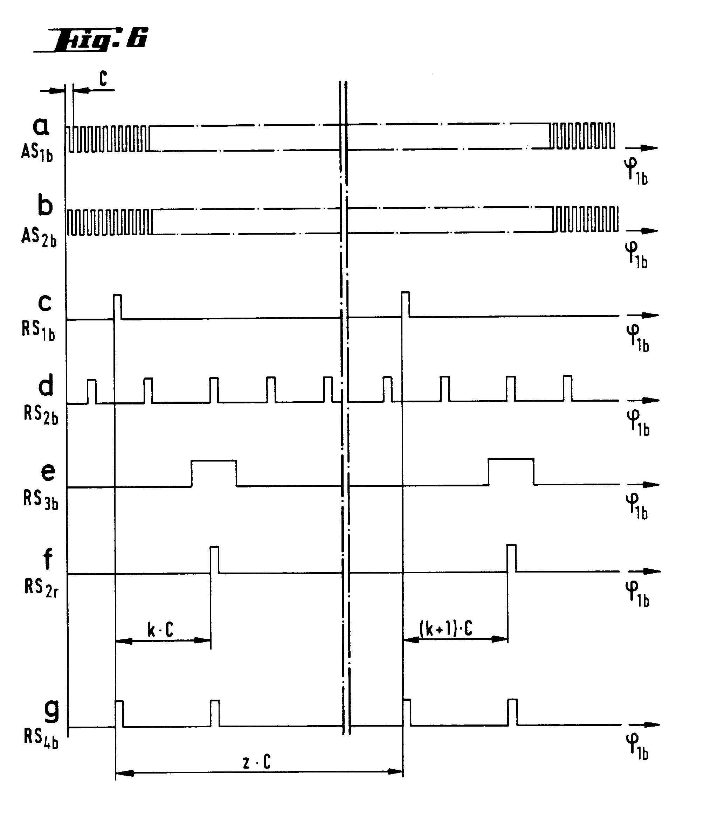

Die inkrementale Winkelteilung $T_b$ und die erste Referenzmarke $R_{1b}$ der ersten Scheibe $S_{1b}$ werden von einer ersten Abtasteinheit $A_{1b}$ abgetastet, die eine erste Beleuchtungseinheit $B_{1b}$ mit parallelem Lichtstrahlengang und zur Abtastung der inkrementalen Winkelteilung $T_b$ zwei zueinander versetzte Teilungsabtastfelder $TF_{1b}$, $TF_{2b}$ auf einer Abtastplatte $AP_b$ sowie zwei zugehörige Teilungsphotoelemente $TP_{1b}$, $TP_{2b}$ auf einer ersten Photoelementeplatine $PP_{1b}$ aufweist, die bei der Drehung der ersten Scheibe $S_{1b}$ bezüglich der ersten Abtateinheit $A_{1b}$ zwei um 90° zueinander phasenversetzte Abtastsignale $AS_{1b}$, $AS_{2b}$ mit einer Periode C entsprechend der Teilungsperiode C der inkrementalen Winkelteilung $T_b$ erzeugen, die in Figur 6a,b als Funktion des Drehwinkels $\varphi_{1b}$ der Geberwelle $W_{1b}$ mit der ersten Scheibe $S_{1b}$ dargestellt sind und aus denen in bekannter Weise die Winkelmeßwerte und der Drehsinn der ersten Scheibe $S_{1b}$ ermittelt werden. Die erste Abtasteinheit $A_{1b}$ weist zusätzlich zur Abtastung der ersten Referenzmarke $R_{1b}$ ein erstes Referenzabtastfeld $RF_{1b}$ auf der Abtastplatte $AP_b$ sowie auf der ersten Photoelementeplatine $PP_{1b}$ ein zugehöriges erstes Referenzphotoelement $RP_{1b}$ auf, das pro Umdrehung der ersten Scheibe $S_{1b}$ ein erstes Referenzsignal $RS_{1b}$ erzeugt, das in Figur 6c als Funktion des Drehwinkels $\varphi_{1b}$ der Geberwelle $W_{1b}$ mit der ersten Scheibe $S_{1b}$ dargestellt ist.

Die 32 zweiten Referenzmarken $R_{2b}$ der ersten Scheibe $S_{1b}$ werden von einer zweiten Abtasteinheit $A_{2b}$ abgetastet, die eine zweite Beleuchtungseinheit $B_{2b}$ mit parallelem Lichtstrahlengang und 32 zweite Referenzabtastfelder $RF_{2b}$ auf der zweiten Scheibe $S_{2b}$ sowie auf einer zweiten Photoelementeplatine $PP_{2b}$ ein zugehöriges zweites Referenzphotoelement $RP_{2b}$ aufweist, das pro Umdrehung der ersten Scheibe $S_{1b}$ 32 zweite Referenzsignale $RS_{2b}$ erzeugt, die in Figur 6d als Funktion des Drehwinkels $\varphi_{b1}$ der Geberwelle $W_{1b}$ mit der ersten Scheibe $S_{1b}$ dargestellt sind. Zwischen der ersten Referenzmarke $R_{1b}$ und der ersten zweiten Referenzmarke $R_{2b}$ auf der ersten Scheibe $S_{1b}$ besteht ein derartiger Winkelversatz, daß beim Anfangspunkt des gesamten Meßbereichs die erste Referenzmarke $R_{1b}$ vom ersten Referenzabtastfeld $RF_{1b}$ und die erste zweite Referenzmarke $R_{2b}$ vom ersten zweiten Referenzabtastfeld $RF_{2b}$ simultan abgetastet werden.

Die zweite Scheibe $S_{1b}$ ist auf einer zweiten Welle $W_{2b}$ befestigt, die im Inneren des Gehäuses $G_b$ drehbar gelagert ist und von der ersten Welle $W_{1b}$ über ein erstes Untersetzungsgetriebe $UG_{1b}$ mit einem ersten Untersetzungsverhältnis $i_{1b}$ = 32 angetrieben wird. Nach jeder vollen Umdrehung der ersten Scheibe $S_{1b}$ hat sich die zweite Scheibe $S_{2b}$ um 1/32 Umdrehungen gedreht, so daß nun die 32 zweiten Referenzmarken $R_{2b}$ der ersten Scheibe $S_{1b}$ vom nächstfolgenden zweiten Referenzabtastfeld $RF_{2b}$ der zweiten Schreibe $S_{2b}$ abgetastet werden. Diese 32 zweiten Referenzabtastfelder $RF_{2b}$ sind spiralförmig mit einem jeweiligen gegenseitigen radialen Versatz entsprechend einer Teilungsperiode C der inkrementalen Winkelteilung $T_b$ auf der zweiten Schreibe $S_{2b}$ angeordnet. Da der Mittelpunkt $M_b$ der zweiten Scheibe $S_{1b}$

auf einer Tangente $TG_b$ an die Mittellinie $ML_b$ der zweiten Referenzmarken $R_{2b}$ der ersten Scheibe $S_{1b}$ liegt, werden auch bei einem relativ großen Spiel im ersten Untersetzungsgetriebe $UG_{1b}$ zwischen der ersten Scheibe $S_{1b}$ und der zweiten Scheibe $S_{2b}$ die Positionen der erzeugten zweiten Referenzsignale $RS_{2b}$ bezüglich der inkrementalen Winkelteilung $T_b$ nicht beeinflußt.

Der gesamte Meßbereich dieses zweiten inkrementalen Drehgebers möge n Umdrehungen der Geberwelle $W_{1b}$ mit der ersten Scheibe $S_{1b}$ betragen. Das Auftreten des ersten Referenzsignals $RS_{1b}$ zeigt lediglich an, daß die erste Scheibe $S_{1b}$ eine ganze Umdrehung vollführt hat, nicht jedoch, welche Umdrehungszahl k (k = 1, 2, ..., n) von einem Anfangspunkt ab jeweils vorliegt. Bei der ersten Umdrehung der ersten Scheibe $S_{1b}$ werden die 32 zweiten Referenzmarken $R_{2b}$ vom ersten zweiten Referenzabtastfeld $RF_{2b}$ zur Erzeugung von 32 zweiten Referenzsignalen $RS_{2b}$ abgetastet, von denen eines den spezifischen Versatz 1 · C gegenüber dem ersten Referenzsignal $RS_{1b}$ besitzt. Bei der k-ten Umdrehung der ersten Scheibe $S_{1b}$ werden die 32 zweiten Referenzmarken $R_{2b}$ vom k-ten zweiten Referenzabtastfeld $RF_{2b}$ zur Erzeugung von 32 zweiten Referenzsignalen $RS_{2b}$ abgetastet, von denen eines den spezifischen Phasenversatz k · C gegenüber dem ersten Referenzsignal $RS_{1b}$ aufweist. Dieser spezifische Versatz k · C zwischen dem ersten Referenzsignal $RS_{1b}$ und dem k-ten zweiten Referenzsignal $RS_{2b}$ wird durch den radialen Versatz von jeweils einer Teilungsperiode C zwischen den benachbarten zweiten Referenzabtastfeldern $RF_{2b}$ bewirkt.

Um von den 32 zweiten Referenzsignalen $RS_{2b}$, die bei der k-ten Umdrehung der ersten Scheibe $S_{1b}$ erzeugt werden, dasjenige mit dem spezifischen Versatz k · C gegenüber dem ersten Referenzsignal $RS_{1b}$ zu erkennen, ist eine dritte Scheibe $S_{3b}$ konzentrisch zur ersten Scheibe $S_{1b}$ auf der ersten Welle $W_{1b}$ befestigt und weist eine dritte Referenzmarke $R_{3b}$ in Form einer Spirale auf, die sich über 180° auf der dritten Scheibe $S_{3b}$ erstreckt; der tatsächlich ausgenutzte Winkelbereich ist jedoch kleiner als 180°. Zur Abtastung dieser dritten Referenzmarke $R_{3b}$ ist eine dritte Abtasteinheit $A_{3b}$ vorgesehen, die eine dritte Beleuchtungseinheit $B_{3b}$ mit parallelem Lichtstrahlengang und ein drittes Referenzabtastfeld $RF_{3b}$ in Form einer Spirale auf einer vierten Scheibe $S_{4b}$ sowie auf einer dritten Photoelementeplatine $PP_{3b}$ ein zugehöriges drittes Referenzphotoelement $RP_{3b}$ aufweist, das pro Umdrehung der ersten Scheibe $S_{1b}$ ein drittes Referenzsignal $RS_{3b}$ erzeugt, das in Figur 6e als Funktion des Drehwinkels $\varphi_{1b}$ der Geberwelle $W_{1b}$ mit der ersten Scheibe $S_{1b}$ dargestellt ist.

Die vierte Scheibe $S_{4b}$ ist auf einer dritten Welle $W_{3b}$ befestigt, die im Inneren des Gehäuses $G_b$ drehbar gelagert ist und von der zweiten Welle $W_{2b}$ über ein zweites Untersetzungsgetriebe $UG_{2b}$ mit einem zweiten Untersetzungsverhältnis $i_{2b}$ = 32 angetrieben wird. Zwischen der ersten Scheibe $S_{1b}$ und der vierten Scheibe $S_{4b}$ besteht somit ein drittes Untersetzungsverhältnis $i_3 = i_1 \cdot i_2$ = 1024. Da das spiralförmige dritte Referenzabtastfeld $RF_{3b}$ pro 1024 Umdrehungen der ersten Scheibe $S_{1b}$ nur eine Umdrehung vollführt, scheint sich das wirksame Abtastfeld, das aus dem spiralförmigen dritten Referenzabtastfeld $RF_{3b}$ und der Breite des dritten Referenzphotoelementes $RP_{3b}$ gebildet wird, über 512 Umdrehungen langsam radial zu verschieben. Die Ausdehnung des parallelen Lichtstrahlengangs und die Ausdehnung des dritten Referenzphotoelements $RP_{3b}$ sind etwas größer als die scheinbare radiale Verschiebung des wirksamen Abtastfeldes.

Aufgrund dieser radialen Verschiebung dieses wirksamen Abtastfeldes bzw. des dritten Referenzabtastfeldes $RF_{3b}$ ändert sich die Lage des dritten Referenzsignals $RS_{3b}$ mit jeder Umdrehung der Geberwelle $W_{1b}$ mit der ersten Scheibe $S_{1b}$ um $360°/i_{3b} = 360°/1024$. Wenn die inkrementale Winkelteilung $T_b$ der ersten Scheibe $S_{1b}$ eine Anzahl z = 1024 Teilungsperioden C besitzt, ändert sich somit die Lage des dritten Referenzsignals $RS_{3b}$ pro Umdrehung der Geberwelle $W_{1b}$ mit der ersten Scheibe $S_{1b}$ um eine Teilungsperiode C der inkrementalen Winkelteilung $T_b$. Die Lage des dritten Referenzsignals $RS_{3b}$ ist jedoch aufgrund des Spiels in den beiden Untersetzungsgetrieben $UG_{1b}$, $UG_{2b}$ mit einer gewissen Unsicherheit behaftet.

Daher werden durch eine Und-Verknüpfung die zweiten Referenzsignale $RS_{2b}$ und das dritte Referenzsignal $RS_{3b}$ zu einem resultierenden zweiten Referenzsignal $RS_{2r}$ (Figur 6f) kombiniert, das den spezifischen Versatz k · C gegenüber dem ersten Referenzsignal $RS_{1b}$ zur Kennzeichnung der k-ten Umdrehung der ersten Scheibe $S_{1b}$ (linke Seite der Figur 3) bzw. das den spezifischen Versatz (k + 1) · C zur Kennzeichnung der (k+1)-ten Umdrehung der ersten Scheibe $S_{1b}$ aufweist (rechte Seite der Figur 3); je nach Drehsinn der ersten Scheibe $S_{1b}$ vergrößert bzw. verringert sich die Zahl k um den Wert 1 pro Umdrehung der Geberwelle $W_{1b}$ mit der ersten Scheibe $S_{1b}$.

Das erste Referenzsignal $RS_{1b}$ und das resultierende zweite Referenzsignal $RS_{2r}$ können auch über ein Oder-Gatter zu einem vierten Signal $RS_{4b}$ gemäß Figur 6g auf einer Leitung zusammengefaßt werden. In einer nicht gezeigten Auswerteeinrichtung kann dann leicht die Zahl k für die k-te Umdrehung der ersten Scheibe $S_{1b}$ ermittelt werden.

Ebenso wie die erste Scheibe $S_{1b}$ und die zweite Scheibe $S_{2b}$ sind auch die dritte Scheibe $S_{3b}$ und die vierte Scheibe $S_{4b}$ dicht nebeneinander in Richtung der Lichtstrahlengänge angeordnet; die erste Scheibe $S_{1b}$ und die zweite Scheibe $S_{2b}$ sind parallel zueinander exzentrisch versetzt.

Wenn die Referenzmarken $R_{1b}$, $R_{2b}$, $R_{3b}$ und die Referenzabtastfelder $RF_{1b}$, $RF_{2b}$, $RF_{3b}$ nicht jeweils durch einen Einzelstrich gemäß Figur 5 gebildet sind, sondern jeweils aus einer Strichgruppe mit einer Zufallsstrichverteilung bestehen, kann man schmalere und steilere Referenzsignale $RS_{1b}$, $RS_{2b}$, $RS_{3b}$ erzeugen und erhält als weiteren Vorteil, daß man mit kleineren Referenzphotoelementen $RP_{1b}$, $RP_{2b}$, $RP_{3b}$ auskommt; kleinere Referenzphotoelemente $RP_{1b}$, $RP_{2b}$, $RP_{3b}$ kann man auch einsetzen, wenn die parallelen Lichtstrahlenbündel der Abtasteinheiten $A_{1b}$, $A_{2b}$, $A_{3b}$ jeweils durch eine Linse gesammelt werden.

Das Spiel in den beiden Untersetzungsgetrieben $UG_{1b}$, $UG_{2b}$ zwischen der dritten Scheibe $S_{3b}$ und der vierten Scheibe $S_{4b}$ kann verhältnismäßig groß sein, da das spiralförmige dritte Referenzabtastfeld $RF_{3b}$ sehr flach verläuft und - wie aus dem Signaldiagramm nach Figur 6 hervorgeht - eine relativ große Toleranz für die Lage und Breite des dritten Referenzsignals $RS_{3b}$ möglich ist.

In nicht gezeigter Weise können die 32 zweiten Referenzabtastfelder $RF_{2b}$ auf der zweiten Scheibe $S_{2b}$ auch zu einem einzigen spiralförmigen Referenzabtastfeld zusammengefaßt werden.

Das spiralförmige dritte Referenzabtastfeld $RF_{3b}$ auf der vierten Scheibe $S_{4b}$ kann - wie in Figur 5 gezeigt - die gleiche Form wie die spiralförmige dritte Referenzmarke $R_{3b}$ auf der dritten Scheibe $S_{3b}$ aufweisen, so daß sich maximale Signalhöhen für das dritte Referenzsignal $RS_{3b}$ ergeben.

Da sich die spiralförmige dritte Referenzmarke $R_{3b}$ nur über 180° erstreckt, erstreckt sich in diesem Fall das spiralförmige dritte Referenzabtastfeld $RF_{3b}$ auch über 180°. Die eindeutige Funktion des Drehgebers ist daher nur über eine halbe Umdrehung der dritten Scheibe $S_{3b}$ gegeben, so daß die Gesamtzahl n der eindeutig unterscheidbaren Umdrehungen der ersten Scheibe $S_{1b}$ und damit der Geberwelle $W_{1b}$ n < z/2 ist (z = Anzahl der Teilungsperioden C der inkrementalen Winkelteilung $T_b$). Für die beiden Untersetzungsverhältnisse $i_{1b}$ und $i_{2b}$ gilt:

$$i_{1b} \cdot i_{2b} \geqq z.$$

Aus den Abtastsignalen $AS_{1b}$, $AS_{2b}$ der inkrementalen Winkelteilung $T_b$ und dem spezifischen Versatz zwischen dem ersten Referenzsignal $RS_{1b}$ und dem resultierenden zweiten Referenzsignal $RS_{2r}$ für die jeweilige Umdrehungszahl wird der absolute Winkelmeßwert ermittelt.

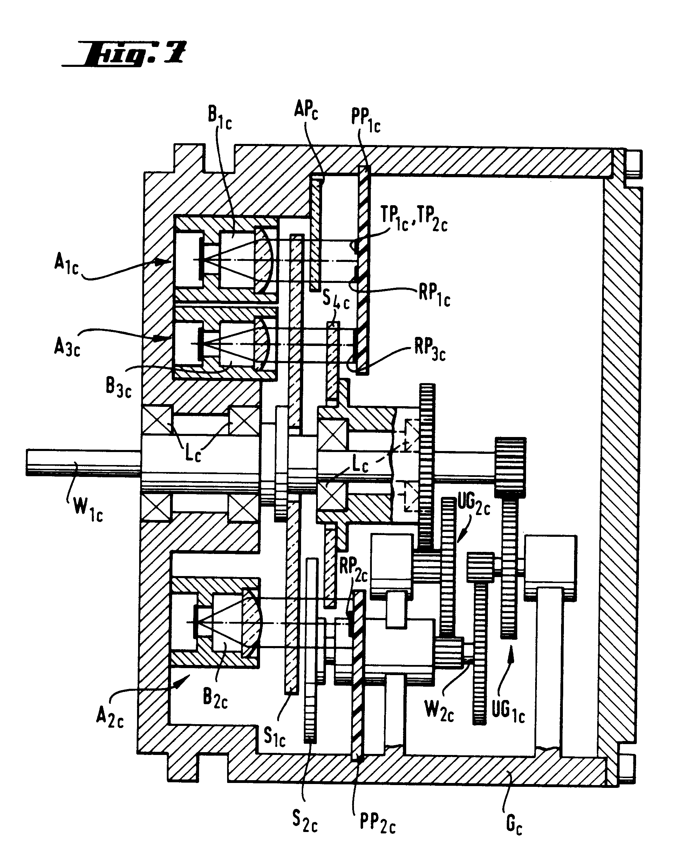

In Figur 7 ist ein dritter inkrementaler Drehgeber mit drei Scheiben in einem Längsschnitt gezeigt, bei dem die dritte Referenzmarke $R_{3b}$ der dritten Scheibe $S_{3b}$ nach Figur 5 auf der ersten Scheibe $S_{b1}$ konzentrische angeordnet ist; die dritte Scheibe $S_{3b}$ nach Figur 4 kann somit entfallen. Die übrigen Elemente entsprechen in modifizierter Anordnung den Elementen nach Figur 4 und weisen daher auch die gleichen Bezugszeichen auf, bei denen jedoch der Buchstabe b durch c ersetzt ist. Dieser dritte Drehgeber besitzt den Vorteil eines weiter vereinfachten Aufbaus.

**Patentansprüche**

1. Inkrementaler Drehgeber, dessen Geberwelle ($W_1$) mit einer eine inkrementale Winkelteilung (T) und wenigstens eine Referenzmarke ($R_1$, $R_2$) aufweisenden ersten Scheibe ($S_1$) verbunden ist, an die über ein Untersetzungsgetriebe ($UG_1$) wenigstens eine zweite Scheibe ($S_2$) angekoppelt ist, dadurch gekennzeichnet, daß auf der ersten Scheibe ($S_1$) eine einzige erste Referenzmarke ($R_1$) und wenigstens eine zweite Referenzmarke ($R_2$) sowie auf der zweiten Scheibe ($S_2$) ein spiralförmiges Referenzabtastfeld ($RF_2$) vorgesehen sind, daß die erste Scheibe ($S_1$) und die zweite Scheibe ($S_2$) parallel zueinander exzentrisch versetzt sind, daß aus der ersten Referenzmarke ($R_1$) ein erstes Referenzsignal ($RS_1$) und aus der wenigstens einen zweiten Referenzmarke ($R_2$) mittelsdes spiralförmigen Referenzabtastfeldes ($RF_2$) ein zweites Referenzsignal ($RS_2$) erzeugt werden, dessen Versatz zum ersten Referenzsignal ($RS_1$) die Umdrehungszahl k der Geberwelle ($W_1$) angibt.

2. Drehgeber nach Anspruch 1, dadurch gekennzeichnet, daß zwischen der ersten Scheibe ($S_1$) und der zweiten Scheibe ($S_2$) ein Untersetzungsverhältnis i besteht und daß auf der zweiten Scheibe ($S_2$) eine Anzahl i Referenzabtastfelder ($RF_2$) vorgesehen sind, die einen gegenseitigen radialen Versatz aufweisen.

3. Drehgeber nach Anspruch 1, dadurch gekennzeichnet, daß auf der ersten Scheibe ($S_{1b}$) neben der inkrementalen Winkelteilung ($T_b$) und der ersten Referenzmarke ($R_{1b}$) eine Anzahl $i_{1b}$ äquidistanter zweiter Referenzmarken ($R_{2b}$) vorgesehen sind, die von einer Anzahl $i_{1b}$ radial gegeneinander versetzter zweiter Referenzabtastfelder ($RF_{2b}$) auf der zweiten Scheibe ($S_{2b}$) abgetastet werden, wobei zwischen der ersten Scheibe ($S_{1b}$) und der zweiten Scheibe ($S_{2b}$) ein erstes Untersetzungsverhältnis $i_{1b}$ besteht, und daß auf einer dritten Scheibe ($S_{3b}$), die mit der ersten Scheibe ($S_{1b}$) verbunden ist, eine spiralförmige dritte Referenzmarke ($R_{3b}$) vorgesehen ist, die von einem spiralförmigen dritten Referenzabtastfeld ($RF_{3b}$) auf einer vierten Scheibe ($S_{4b}$) abgetastet wird, wobei zwischen der zweiten Scheibe ($S_{2b}$) und der vierten Scheibe ($S_{4b}$) ein zweites Untersetzungsverhältnis $i_{2b}$ besteht.

4. Drehgeber nach Anspruch 3, dadurch gekennzeichnet, daß die spiralförmige dritte Referenzmarke ($R_{3b}$) auf der ersten Scheibe ($S_{1b}$) konzentrisch zur inkrementalen Winkelteilung ($T_b$) vorgesehen ist.

5. Drehgeber nach Anspruch 2 oder 3, dadurch gekennzeichnet, daß die zweiten Referenzabtastfelder (RF$_2$) auf der zweiten Scheibe (S$_2$) um eine Teilungsperiode (C) der inkrementalen Winkelteilung (T) radial zueinander versetzt sind.

6. Drehgeber nach Anspruch 3, dadurch gekennzeichnet, daß die spiralförmige dritte Referenzmarke (R$_{3b}$) und das spiralförmige dritte Referenzabtastfeld (R$_{3b}$) die gleiche Steigung aufweisen.

7. Drehgeber nach Anspruch 3, dadurch gekennzeichnet, daß die vierte Scheibe (S$_{4b}$) konzentrisch zur dritten Scheibe (S$_{3b}$) angeordnet ist.

8. Drehgeber nach Anspruch 3, dadurch gekennzeichnet, daß die dritte Scheibe (S$_{3b}$) mit der ersten Scheibe (S$_{1b}$) konzentrisch starr verbunden ist.

9. Drehgeber nach Anspruch 3, dadurch gekennzeichnet, daß aus den bei der Abtastung der zweiten Referenzmarken (R$_{1b}$) gewonnenen zweiten Referenzsignalen (RS$_{2b}$) und aus dem bei der Abtastung der dritten Referenzmarke (R$_{3b}$) gewonnenen dritten Referenzsignal (RS$_{3b}$) mittels eines Verknüpfungsgliedes ein resultierendes zweites Referenzsignal (RS$_{2r}$) gewonnen wird.

10. Drehgeber nach Anspruch 9, dadurch gekennzeichnet, daß das Verknüpfungsglied aus einem Undgatter besteht.

**Claims**

1. An incremental shaft encoder whose encoder shaft (W$_1$) is connected to a first disc (S$_1$) having an incremental angular graduation (T) and at least one reference mark (R$_1$, R$_2$), to which first disc at least one second disc (S$_2$) is coupled through a reduction gear (UG$_1$), characterized in that a single first reference mark (R$_1$) and at least one second reference mark (R$_2$) are provided on the first disc (S$_1$) and a spiral reference sensing field (RF$_2$) is provided on the second disc (S$_2$), in that the first disc (S$_1$) and the second disc (S$_2$) are offset eccentrically parallel to one another, in that a first reference signal (RS$_1$) is generated from the first reference mark (R$_1$) and a second reference signal (RS$_2$) is generated from the at least one second reference mark (R$_2$) by means of the spiral reference sensing field (RF$_2$), the displacement of the second reference signal (RS$_2$) from the first reference signal (RS$_1$) indicating the number of revolutions of the encoder shaft (W$_1$).

2. A shaft encoder according to claim 1, characterized in that there is a reduction ratio *i* between the first disc (S$_1$) and the second disc (S$_2$) and in that there are provided a number *i* of reference sensing fields (RF$_2$) having a mutual radial offset.

3. A shaft encoder according to claim 1, characterized in that, as well as the incremental angular graduation (T$_b$) and the first reference mark (R$_{1b}$) there are provided on the first disc (S$_{1b}$) a number $i_{1b}$ of equidistant second reference marks (R$_{2b}$) which are sensed by a number $i_{1b}$ of radially displaced second reference sensing fields (RF$_{2b}$) on the second disc (S$_{2b}$), where a first reduction ratio $i_{1b}$ exists between the first disc (S$_{1b}$) and the second disc (S$_{2b}$), and in that a spiral third reference mark (R$_{3b}$) is provided on a third disc (S$_{3b}$), which is connected to the first disc (S$_{1b}$), the third reference mark being sensed by a spiral third reference sensing field (RF$_{3b}$) on a fourth disc (S$_{4b}$), where there is a second reduction ratio $i_{2b}$ between the second disc (S$_{2b}$) and the fourth disc (S$_{4b}$).

4. A shaft encoder according to claim 3, characterized in that the spiral third reference mark (R$_{3b}$) on the first disc (S$_{1b}$) is concentric with the incremental angular graduation (T$_b$).

5. A shaft encoder according to claim 2 or 3, characterized in that the second reference sensing fields (RF$_2$) on the second disc (S$_2$) are radially offset relative to one another by one grating period (C) of the incremental angular graduation (T).

6. A shaft encoder according to claim 3, characterized in that the spiral third reference mark (R$_{3b}$) and the spiral third reference sensing field (RF$_{3b}$) have the same steepness.

7. A shaft encoder according to claim 3, characterized in that the fourth disc (S$_{4b}$) is arranged concentric with the third disc (S$_{3b}$).

8. A shaft encoder according to claim 3, characterized in that the third disc (S$_{3b}$) is rigidly connected to the first disc (S$_{1b}$), concentric therewith.

9. A shaft encoder according to claim 3, characterized in that a resultant second reference signal (RS$_{2r}$) is derived by means of a combining means from the second reference signals (RS$_{2b}$) derived from the sensing of the second reference marks (R$_{2b}$) and the third reference signal (RS$_{3b}$) derived from the third reference mark (R$_{3b}$).

10. A shaft encoder according to claim 9, characterized in that the combining means consists of an AND gate.

## Revendications

1. Codeur incrémental, dont l'axe de codeur (W1) est lié à une graduation angulaire (T) incrémentale et à un premier disque (S1) portant au moins un repère de référence (R1, R2) auquel est couplé au moins un deuxième disque (S2) par l'intermédiaire d'un engrenage réducteur (UG1), caractérisé par le fait qu'il est prévu, sur le premier disque (S1), un premier repère de référence (R1) unique et au moins un deuxième repère de référence (R2) et, sur le deuxième disque (S2), une zone de lecture de référence (RF2) en spirale, que le premier disque (S1) et le deuxième disque (S2) sont parallèles et excentrés l'un par rapport à l'autre, que l'on produit, à partir du premier repère de référence (R1), un premier signal de référence (RS1) et, à partir du deuxième repère de référence (R2), au nombre d'au moins un, un deuxième signal de référence (RS2) à l'aide de la zone de lecture de référence (RF2) en spirale, signal dont le décalage par rapport au premier signal de référence (RS1) indique le nombre de tours k de l'axe de codeur (W1).

2. Codeur selon la revendication 1, caractérisé par le fait qu'il existe un rapport de réduction i entre le premier disque (S1) et le deuxième disque (S2) et qu'il est prévu sur le deuxième disque (S2) un nombre i de zones de lecture de référence (RF2) en spirale qui sont mutuellement décalées dans la direction radiale.

3. Codeur selon la revendication 1, caractérisé par le fait qu'il est prévu sur le premier disque (S1b), à côté de la graduation angulaire incrémentale (Tb) et du premier repère de référence (R1b), un nombre ilb de deuxièmes repères de référence (R2b) équidistants qui sont lus par un nombre ilb de zones de lecture de référence (RF2b) mutuellement décalées dans la direction radiale sur le deuxième disque (S2b), un premier rapport de réduction ilb existant entre le premier disque (S1b) et le deuxième disque (S2b), et qu'il est prévu, sur un troisième disque (S3b) qui est relié au premier disque (S1b), un troisième repère de référence (R3b) en spirale qui est lu par une troisième zone de lecture de référence (RF3b) en spirale sur un quatrième disque (S4b), un deuxième rapport de réduction i2b existant entre le deuxième disque (S2b) et le quatrième disque (S4b).

4. Codeur selon la revendication 3, caractérisé par le fait que le troisième repère de référence (R3b) en spirale sur le premier disque (S1b) est concentrique avec la graduation angulaire (Tb) incrémentale.

5. Codeur selon la revendication 2 ou 3, caractérisé par le fait que les deuxièmes zones de lecture de référence (RF2) sur le deuxième disque (S2) sont mutuellement décalées dans la direction radiale d'une période de graduation (C) de la graduation angulaire (T) incrémentale.

6. Codeur selon la revendication 3, caractérisé par le fait que le troisième repère de référence (R3b) en spirale et la troisième zone de lecture de référence (RF3b) en spirale ont le même pas.

7. Codeur selon la revendication 3, caractérisé par le fait que le quatrième disque (S4b) est concentrique avec le troisième disque (S3b).

8. Codeur selon la revendication 3, caractérisé par le fait que le troisième disque (S3b) est concentrique avec le premier disque (S1b) et est relié rigidement à celui-ci.

9. Codeur selon la revendication 3, caractérisé par le fait que l'on obtient, à partir des deuxièmes signaux de référence (RS2b) produits par la lecture des deuxièmes repères de référence (R2b) et, à partir du troisième signal de référence (RS3b) provenant de la lecture du troisième repère de référence (R3b), par l'intermédiaire d'un élément logique, un deuxième signal de référence (RS2r) résultant.

10. Codeur selon la revendication 9, caractérisé par le fait que l'élément logique est constitué par une porte-ET.

# Fig. 1

Fig. 2

Fig. 3

# Fig. 4

*Fig. 5*

RP_{2b}

S_{2b}

RF_{2b}

R_{2b}

R_{1b}

T_b

TF_{1b}

TF_{2b}

A_{1b}

AP_b

RF_{1b}

A_{2b}

TG_b

M_b

ML_b

31-C

RP_{3b}

R_{3b}

A_{3b}

RF_{3b}

S_{Lb}

R_{2b}

S_{3b}

S_{1b}

EP 0 413 180 B1

# Fig. 6

# Fig. 7